# FASCICULE DE BREVET EUROPEEN

(11) **EP 4 095 306 B1**
(45) Date de publication et mention de la délivrance du brevet: **22.10.2025**
(21) Numéro de dépôt: 22175566.3
(22) Date de dépôt: 25.05.2022
(51) Int. Cl.: D06F 31/00, D06F 35/00, C02F 1/78

(54) **PROCEDE DE LAVAGE DE TEXTILES ET DISPOSITIF INDUSTRIEL POUR SA MISE EN OEUVRE**
VERFAHREN ZUM WASCHEN VON TEXTILIEN UND INDUSTRIELLE VORRICHTUNG ZUR DURCHFÜHRUNG DES VERFAHRENS
METHOD FOR WASHING TEXTILES AND INDUSTRIAL DEVICE FOR CARRYING IT OUT

(30) Priorité: 28.05.2021 FR 2105591
(43) Date de publication de la demande: 30.11.2022
(73) Titulaire: Gaches Chimie Specialités, 31100 Toulouse (FR)
(72) Inventeur: GACHES, Pierre, 31400 TOULOUSE (FR); BOULY, Jean-Pierre, 64800 SAINT-VINCENT (FR)
(74) Mandataire: BARRE LAFORGUE

(56) Documents cités:
- DE-A1- 102014 009 951
- JP-A- H03 146 094
- JP-A- H08 323 088
- US-A1- 2008 302 139

## Description

L'invention concerne le domaine général du lavage, du nettoyage, de la désinfection et/ou du blanchissage de textiles en blanchisserie industrielle, en particulier du lavage, du nettoyage, de la désinfection et/ou du blanchissage en blanchisserie industrielle de textiles utilisés en collectivités et notamment en milieu hospitalier, pour lesquels les dispositions règlementaires en matière d'hygiène et de contrôle bactériologique peuvent être strictes, rigoureuses et contraignantes.

On connait des installations de blanchisserie industrielle permettant de laver en continu des quantités importantes de textiles, par exemple jusqu'à 10 tonnes de textiles quotidiennement. En général, dans de telles installations, notamment dans les blanchisseries destinées à laver des textiles utilisés en milieu hospitalier, les textiles et l'eau de lavage sont chauffés à une température supérieure à 40°C, en pratique supérieure à 60°C et souvent comprise entre 60°C et 80°C pour obtenir des textiles satisfaisant les niveaux de désinfection requis en milieu hospitalier.

De telles installations ou blanchisseries procurent des résultats acceptables mais posent problèmes.

Un tel chauffage nécessite un apport d'énergie calorifique important pour que l'eau de lavage atteigne une telle température et que les textiles soient efficacement lavés et, le cas échéant, désinfectés.

En outre, un tel apport en énergie calorifique est à l'origine d'une production et de rejets conséquents de dioxyde de carbone (CO₂) dans l'atmosphère.

L'invention vise à pallier ces inconvénients.

Par ailleurs, la législation française en vigueur impose que la température des fluides usés rejetés par de telles installations de lavage industriel ne dépasse pas 30°C. Pour satisfaire ces dispositions règlementaires, les installations de lavage industriel connues doivent prévoir des moyens spécifiques de stockage et de refroidissement des fluides usés préalablement à leur rejet.

L'invention vise à pallier en combinaison ces deux derniers inconvénients en proposant un procédé de lavage industriel de textiles, notamment un tel procédé de lavage incluant un procédé de désinfection, qui ne nécessite pas de porter les textiles à haute température comprise entre 60°C et 80°C, ni de prévoir d'installation spécifique de refroidissement de fluides aqueux usés avant rejet.

Par ailleurs, le CTTN-IREN (Institut de Recherche sur l'Entretien et le Nettoyage, Écully, France) présente sur son site internet (https://www.cttn-iren.com/action-interet-general/synthese-blanchisserie-industrielle.php) un compte-rendu daté du 16 mars 2010, intitulé « L'ozone en blanchisserie industrielle : Quelles conclusion ? » et relatif à l'utilisation de l'ozone en blanchisserie. Ce compte rendu décrit différents modes possibles d'injection d'ozone gazeux dans une eau de lavage introduit dans le tambour d'une machine laveuse-essoreuse domestique. Ce compte rendu démontre que le pourcentage d'enlèvement de salissures oxydable telles que des taches normalisées d'herbe, de vin, de tomate, de myrtilles, de cassis, obtenu par un lavage à 25°C avec de l'eau ozonée est identique -notamment compris entre 10% et 30%- au pourcentage d'enlèvement de ces mêmes taches obtenu par un lavage à 25°C avec de l'eau douce. Ce compte rendu indique également que pour atteindre un pourcentage d'enlèvement de ces mêmes taches par lavage à 25°C qui soit compris entre 45% et 70%, il convient de réaliser ce lavage en présence d'eau de javel. En conclusion, ce compte rendu portant sur l'utilisation de l'ozone en blanchisserie industrielle affirme que *« les systèmes testés n'apportent pas d'avantages en termes de détergence et de blanchiment ».*

Ce même compte rendu indique aussi qu'un lavage d'un tissu selon un programme de lavage représentatif d'un lavage utilisé en blanchisserie, réalisé à 25°C avec de l'eau ozonée permet de diminuer de 70 000 UFC (unité formant colonie) à 100 UFC la population bactérienne présente sur le tissu. Cette diminution de la population bactérienne est cependant très inférieure aux dispositions de la norme AFNOR NFT 72101 qui dispose qu'un désinfectant doit réduire d'un facteur 100 000 le nombre de bactéries.

L'invention vise à pallier cet inconvénient.

US2008/302139A1 décrit un tunnel de lavage dans lequel de l'eau ozonée est introduite dans différentes zones de ce tunnel. DE102014009951 décrit un procédé de lavage d'articles de linge dans lequel les articles de linge sont traités avec des substances de lavage dans une première zone de traitement et sont traités avec un agent désinfectant dans une deuxième zone de traitement, distincte de la première zone de lavage.

L'invention vise donc à proposer un procédé de lavage, notamment un procédé de lavage et de désinfection, de textiles permettant non seulement un lavage -c'est à dire l'élimination au moins partielle de souillures- mais aussi une désinfection au moins partielle de ces textiles, conformément aux normes règlementaires.

L'invention vise aussi à proposer un tel procédé qui limite la dégradation des fibres constitutives de ces textiles et qui conduit à un rejet minime dans l'environnement d'eau chargée en microfibres textiles résultant de cette dégradation.

L'invention vise aussi à proposer un tel procédé qui évite l'usure prématurée des textiles du fait de ce lavage.

L'invention vise donc à proposer un tel procédé qui préserve les qualités des textiles soumis à ce procédé et qui augmente leur durée de vie par rapport à des textiles lavés par un procédé de l'art antérieur.

L'invention vise en particulier à proposer un tel procédé qui préserve les qualités des textiles, qu'il s'agisse de textiles neufs ou de textiles usagés, de textiles à fibres de coton essentiellement -voire uniquement-, de textile à fibres synthétiques ou de textiles mixtes à fibres de coton et fibres synthétiques.

L'invention vise en particulier à proposer un tel procédé qui permette un lavage et, le cas échéant, une désinfection de textiles blancs mais aussi de textiles de couleur.

L'invention vise aussi à proposer un tel procédé permettant de limiter la formation d'un dépôt de calcaire dans un dispositif de lavage industriel de textiles, dans lequel est mis en œuvre un tel procédé.

En particulier, l'invention vise à proposer un tel procédé qui permet de limiter la formation d'un tel dépôt de calcaire sur les éléments d'un dispositif de lavage industriel de textiles, mis en contact au moins avec une composition aqueuse de lavage, notamment sur certaines pièces mécaniques et sur les joints d'étanchéité, et dans lequel est mis en œuvre un tel procédé.

L'invention vise ainsi à proposer un tel procédé qui permet d'alléger les procédures d'entretien et de maintenance d'un tel dispositif de lavage industriel, tout en assurant une meilleure longévité à un tel dispositif.

L'invention vise aussi à proposer un tel procédé qui permette de diminuer la fréquence des interventions de maintenance.

Mais l'invention vise aussi à proposer un tel procédé permettant de retarder significativement le grisage de textiles, notamment du fait d'un tel dépôt de calcaire.

L'invention vise aussi à proposer un tel procédé permettant de réaliser une économie substantielle d'eau nécessaire pour sa mise en œuvre.

En particulier, l'invention vise à proposer un tel procédé permettant de diminuer de l'ordre de 20% (1 L d'eau d'économie sur une consommation de 5 L d'eau par kilo de textiles lavés et désinfectés) la quantité d'eau nécessaire pour le lavage d'une même quantité d'un même type de textiles, par rapport à un procédé de lavage de l'art antérieur.

L'invention vise aussi et en particulier à proposer un tel procédé permettant d'obtenir une désinfection de niveau au moins égal au niveau obtenu par les procédés de lavage et de désinfection industriels de l'art antérieur.

L'invention vise aussi à proposer un tel procédé permettant d'obtenir un lavage et une désinfection de qualité au moins égale à la qualité de lavage et de désinfection obtenue par des procédés de l'art antérieur.

Ainsi, l'invention vise à proposer un tel procédé susceptible de pouvoir être mis en œuvre par modification mineure d'un tunnel de lavage industriel de l'art antérieur.

Enfin, l'invention vise à proposer un tel procédé qui permet de limiter l'échauffement de l'air atmosphérique environnant le tunnel de lavage industriel.

L'invention vise donc aussi à proposer un tel procédé qui soit respectueuse des conditions de travail des personnels chargés de la mise en œuvre du procédé.

Pour ce faire l'invention concerne un procédé de lavage -notamment un procédé de lavage et de désinfection- de textiles, dans lequel des textiles à laver sont entrainés en déplacement continu dans un tunnel de lavage, d'amont en aval en traversant successivement une série de compartiments contigus formant le tunnel de lavage ;
procédé dans lequel un débit d'une composition, dite composition de lavage, aqueuse comprenant au moins un agent détergent, est mis en contact avec les textiles entrainés en déplacement, au moins dans un sous-ensemble, dit tronçon de lavage, de compartiments successifs de la série de compartiments ;
- ladite composition de lavage présente une température inférieure à 35°C, notamment comprise entre 15°C et 35°C, de préférence comprise entre 22°C et 28°C, plus préférentiellement de l'ordre de 25°C,
- un débit d'ozone (« trioxygène », O3) gazeux est introduit dans au moins un com- partiment dudit tronçon de lavage, le débit d'ozone gazeux étant introduit dans et au contact de ladite composition de lavage.
]L'invention se caractérise en ce que le tunnel de lavage comprend un ultime compartiment, dit compartiment de neutralisation, s'étendant en aval -c'est-à-dire au-delà et en aval dudit tronçon de rinçage- dudit tronçon de rinçage et dans lequel les textiles en- trainés en déplacement sont en contact avec une composition, dite composition de neutralisation, aqueuse comprenant au moins un agent de neutralisation choisi dans le groupe formé des acides faibles -notamment dans le groupe formé des acides orga- niques faibles, par exemple de l'acide peracétique- ; ledit compartiment de neutralisation s'étendant en aval dudit tronçon de rinçage ;
- un débit d'ozone (O3) gazeux est introduit dans ledit compartiment de neutralisation, le débit d'ozone gazeux étant introduit dans et au contact de ladite composition de neutralisation.

Dans tout le texte :
- le terme « tunnel » et l'expression « tunnel de lavage » utilisés dans le domaine de la blanchisserie industrielle désignent un ensemble de compartiments contigus alignés fonctionnellement et destinés à être traversés successivement par des pièces textiles lors de leur lavage. À titre indicatif, un tel « tunnel de lavage » peut comprendre entre 5 et 20 compartiments contigus coopérant en série successivement les uns avec les autres pour laver et désinfecter des textiles. En général, chaque compartiment ou groupe de compartiments successifs est traversé par une composition aqueuse, qui peut être une composition de prélavage, une composition de lavage ou une composition de rinçage, s'écoulant dans chaque compartiment ou groupe de compartiments dans le même sens de progression que les textiles dans le tunnel ou à contrecourant par rapport au sens de progression des textiles ;
- l'expression « en continu » qualifiant le lavage et la désinfection de textiles signifie qu'un flux de textiles dont le lavage et la désinfection sont recherchés, est introduit dans une zone d'entrée amont d'un tunnel de lavage, les textiles circulant longitudinalement de l'amont de ce tunnel vers l'aval de ce tunnel et ressortant de ce tunnel par une sortie aval, distincte de l'entrée amont. Il résulte de ce lavage « en continu » qu'il est possible et avantageux d'introduire -de façon permanente ou de façon intermittente- un flux de textiles à laver en zone d'entrée amont du tunnel de lavage sans aucune nécessité d'attendre que des textiles à laver introduits en zone d'entrée amont soient extraits du tunnel à l'issue de leur lavage, et ;
- les termes « amont » et « aval » sont définis par rapport au sens de déplacement des textiles entrainés d'amont en aval dans le tunnel de lavage, entre une extrémité amont du tunnel de lavage par laquelle des textiles à laver sont introduits et une extrémité aval du tunnel de lavage, de laquelle les textiles lavés sont extraits. Dans tout le texte, le sens de circulation de chacune des compositions aqueuses circulant dans le tunnel est défini par rapport à cette orientation amont et aval des compartiments du tunnel de lavage.

Les inventeurs ont découvert que, contrairement à l'enseignement de l'art antérieur selon lequel l'ozone n'apporterait *« pas d'avantages en terme de détergence et de blanchiment »* pour le lavage de textiles -en particulier pour le lavage de textiles à très basse température, c'est-à-dire à une température inférieure à 35°C, notamment comprise entre 15°C et 35°C, de préférence comprise entre 22°C et 28°C, plus préférentiellement de l'ordre de 25°C-, l'apport d'un débit d'ozone (O₃) gazeux dans au moins un compartiment d'un tunnel de lavage industriel permet, de façon surprenante, non seulement le lavage efficace de textiles à très basse température, mais permet également, de façon toute aussi surprenante, une désinfection poussée de ces textiles, en particulier s'agissant de textiles utilisés en milieu hospitalier. Ils ont en outre découvert qu'il est possible de parvenir à un tel lavage et une telle désinfection sans libération significative d'ozone gazeux dans l'atmosphère régnant autour du tunnel.

Par ailleurs, les inventeurs ont observé que lors de la mise en œuvre d'un procédé selon l'invention, l'ozone gazeux introduit dans le tunnel de lavage au contact des textiles et de ladite composition de lavage semble modifier la susceptibilité des textiles vis-à-vis des détergents de ladite composition de lavage, dans un tel sens que pour obtenir une même efficacité de lavage, une concentration plus faible de détergent et de dégraissant est nécessaire lors de la mise en œuvre du procédé de lavage à très basse température selon l'invention avec introduction d'un débit d'ozone gazeux par rapport à un procédé comparable sans introduction d'un débit d'ozone gazeux. Les inventeurs ont ainsi découvert qu'un effet synergique procuré par la combinaison de l'ozone gazeux et de ladite composition de lavage permet de diminuer la concentration d'agents détergent et dégraissant dans ladite composition de lavage pour une même qualité de lavage. L'invention permet donc de limiter la quantité d'agent(s) détergent(s) à utiliser pour le lavage de textiles et de limiter l'impact écologique négatif de ce lavage, du fait du rejet diminué des agents détergents avec les eaux rejetées. En outre, cet effet synergique permet, en réduisant la quantité d'agent détergent à utiliser pour un tel lavage, de réduire la quantité d'eau nécessaire pour le lavage, en particulier la quantité d'eau nécessaire pour procéder au rinçage des textiles. Les inventeurs ont déterminé que le procédé de lavage selon l'invention permet de réduire de l'ordre de 20% la quantité d'eau nécessaire à ce lavage, par rapport à un procédé de lavage ne comprenant pas l'introduction d'un débit d'ozone gazeux. Avantageusement et selon l'invention, le débit d'ozone (O₃) gazeux est introduit par bullage du débit d'ozone (O₃) gazeux dans et au contact de ladite composition de neutralisation.

Selon l'invention, le débit d'ozone gazeux est formé par un générateur d'ozone connu en lui-même de l'homme du métier. Tout type de générateur d'ozone gazeux peut être utilisé, tel qu'un générateur par irradiation d'oxygène (O₂) par une lumière ultraviolette ou un générateur à décharge à effet couronne, pour autant qu'un tel générateur d'ozone gazeux permette une introduction d'un débit continu ou sensiblement continu d'ozone gazeux. Dans certains modes de réalisation d'un procédé selon l'invention, ladite composition de lavage comprend au moins une enzyme présentant une température d'activité optimale inférieure à 35°C, notamment comprise entre 15°C et 35°C, de préférence comprise entre 22°C et 28°C, plus préférentiellement de l'ordre de 25°C.

Dans certains modes de réalisation avantageux d'un procédé selon l'invention, ladite composition de lavage est une composition aqueuse. Ladite composition de lavage est une solution aqueuse comprenant au moins un agent détergent et au moins une enzyme. Ladite composition de lavage est une solution d'au moins un agent détergent et d'au moins une enzyme dans de l'eau. Il peut s'agir d'une eau de faible titre hydrotimétrique (TH), notamment inférieur ou égal à 15°f (« degré français », 1°f correspond à une concentration d'ions calcium égale à 4 mg/L) ne nécessitant pas de traitement adoucissant. Il peut s'agir d'une eau de titre hydrotimétrique (TH) moyen, notamment compris entre 15°f et 25°f pour laquelle un traitement adoucissant est souhaitable. Il peut s'agir d'une eau de titre hydrotimétrique (TH) élevé, notamment compris entre 25°f et 35°f pour laquelle un traitement adoucissant est recommandé. Il peut s'agir d'une eau de titre hydrotimétrique (TH) très élevé, notamment supérieur à 35°f pour laquelle un traitement adoucissant est indispensable. Dans un procédé selon l'invention, on adapte les constituants de ladite composition de lavage selon le titre hydrotimétrique de l'eau utilisée.

Dans certains modes de réalisation d'un procédé de lavage selon l'invention, ladite composition de lavage comprend au moins une enzyme, notamment au moins une enzyme d'origine bactérienne. Au moins une enzyme est choisie dans le groupe formé des protéases -notamment des protéases actives à 25°C-, des amylases -notamment des amylases actives à 25°C-, des lipases -notamment des lipases actives à 25°C-, des cellulases -notamment des cellulases actives à 25°C-.

Dans certains modes de réalisation avantageux d'un procédé selon l'invention, ladite composition de lavage comprend de l'acide peracétique. Les inventeurs ont découvert que, l'apport d'un débit d'ozone (O₃) gazeux dans une composition de lavage comprenant de l'acide peracétique, circulant dans au moins un compartiment d'un tunnel de lavage industriel de textiles et maintenue à très basse température, c'est à dire à une température considérée comme basse dans le domaine du lavage de textiles, et inférieure à 35°C, notamment comprise entre 15°C et 35°C, de préférence comprise entre 22°C et 28°C, plus préférentiellement de l'ordre de 25°C, permet, de façon surprenante, non seulement le lavage efficace de ces textiles à très basse température, mais permet également, de façon toute aussi surprenante, la désinfection de ces textiles, en particulier s'agissant de textiles à laver provenant d'un milieu hospitalier et destinés à être réutilisés en milieu hospitalier après lavage. Dans certains de ces modes de réalisation, on introduit dans ladite composition de lavage, au moyen d'une pompe doseuse, une quantité d'acide peracétique adaptée pour ne pas détériorer les textiles lors de leur lavage et de leur désinfection. En particulier, on adapte cette quantité d'acide peracétique selon que les textiles à laver sont des textiles blancs ou des textiles de couleur. Dans certains de ces modes de réalisation, cette quantité d'acide peracétique correspond à de 3,5 g à 6,0 g -notamment de l'ordre de 4,0 g- par kilogramme de textiles introduits dans le tunnel de lavage, d'une solution aqueuse d'acide peracétique à une concentration volumique de l'ordre de 15% (v/v). Une telle introduction d'acide peracétique combinée au débit d'ozone gazeux permet d'obtenir, de façon totalement surprenante, une désinfection poussée des textiles à une température inférieure à 35°C, notamment comprise entre 15°C et 35°C, de préférence comprise entre 22°C et 28°C, plus préférentiellement de l'ordre de 25°C, alors que la propriété désinfectante de l'acide peracétique, notamment avec un tel dosage, est de façon usuelle, antérieurement à l'invention, obtenue à une température supérieure ou égale à 40°C dans un procédé industriel de lavage de textiles.

Dans certains modes de réalisation, le débit de ladite composition de lavage s'écoule dans ledit tronçon de lavage selon la même direction principale et selon le même sens, c'est-à-dire d'amont en aval, que la direction principale du flux de textiles entrainés en déplacement globalement longitudinal dans le tunnel de lavage. Dans ces modes de réalisation, le débit de ladite composition de lavage s'écoulant d'amont en aval dans ledit tronçon de lavage. Dans ces modes de réalisation, le débit de ladite composition de lavage et le flux de textiles sont concourants.

Dans ces modes de réalisation, un débit d'ozone gazeux est introduit dans le tunnel de lavage au moins dans un premier compartiment amont dudit tronçon de lavage. Dans certains modes de réalisation avantageux, un débit d'ozone gazeux est introduit dans le tunnel de lavage, dans une pluralité de compartiments amont successifs dudit tronçon de lavage. Le débit d'ozone gazeux est introduit dans le tunnel de lavage, par injection du débit d'ozone gazeux -notamment par bullage du débit d'ozone gazeux- dans ladite composition de lavage et au contact de ladite composition de lavage. Dans ces modes de réalisation, un débit d'ozone gazeux est introduit dans le tunnel de lavage dans un premier compartiment amont dudit tronçon de lavage et dans un deuxième compartiment dudit tronçon de lavage s'étendant immédiatement en aval de ce premier compartiment.

Cela étant, dans d'autres modes de réalisation particuliers, rien n'empêche de prévoir que le débit de ladite composition de lavage s'écoule dans ledit tronçon de lavage, selon la même direction principale et dans le sens opposé, c'est-à-dire d'aval en amont, par rapport à la direction principale du flux de textiles entrainés en déplacement globalement longitudinal dans le tunnel de lavage. Dans ces autres modes de réalisation, les textiles entrainés en déplacement dans ledit tronçon de lavage sont en contact avec le débit de ladite composition de lavage s'écoulant d'aval en amont dans ledit tronçon de lavage. Dans ces autres modes de réalisation, le flux de textiles s'écoule à contrecourant du débit de ladite composition de lavage. Dans ces modes de réalisation particuliers, un débit d'ozone gazeux est introduit dans ladite composition de lavage au moins dans un dernier compartiment aval dudit tronçon de lavage. Dans ces modes de réalisation, un débit d'ozone gazeux est introduit dans ledit tronçon de lavage dans un dernier et dans un avant dernier compartiments aval dudit tronçon de lavage.

Selon certains modes de réalisation avantageux, au moins un débit d'ozone (O₃) gazeux est un débit continu (ou sensiblement continu) d'ozone (O₃) gazeux. Le(s) débit(s) d'ozone (O₃) gazeux est(sont) introduits en permanence dans ledit tronçon de lavage au cours du lavage. Par débit sensiblement continu, on entend qu'il est possible que le débit d'ozone gazeux soit brièvement interrompu, mais seulement pendant une durée qui n'est pas suffisante pour entrainer une diminution sensible de la concentration d'ozone gazeux dans la composition aqueuse de réception du(des) débit(s) d'ozone gazeux. Selon certains modes de réalisation, le(s) débit(s) d'ozone (O₃) gazeux est(sont) maintenu(s) à une valeur constante au cours du lavage. Les inventeurs ont observé que l'introduction d'un débit discontinu d'ozone gazeux (c'est-à-dire un débit discontinu d'ozone gazeux susceptible d'entrainer une diminution sensible de la concentration d'ozone gazeux dans la composition aqueuse réceptrice) ne permet pas l'obtention d'un lavage régulier et homogène.

Selon certains modes de réalisation avantageux, le débit d'ozone (O₃) gazeux introduit dans au moins un -notamment dans chaque- compartiment du tunnel de lavage est tel que le rapport de ce débit d'ozone (O₃) gazeux, exprimé en kilogramme d'ozone gazeux introduit par heure dans l'un des compartiments, sur le flux de textile circulant dans le tunnel, exprimé en kilogramme de textiles par heure -notamment en kilogramme de textiles lavés par heure- est compris entre 1,0 10⁻⁵ et 2,0 10⁻⁵. Ce rapport est ajusté selon la nature du textile et selon la salissure des textiles à laver. Il permet que le rejet d'ozone (O₃) gazeux soit inférieur à 0.1 ppm dans l'atmosphère régnant autour du tunnel. Avantageusement, ce rapport est tel que la mise en œuvre du procédé selon l'invention ne conduit qu'à un rejet limité d'ozone gazeux dans l'atmosphère régnant au tour du tunnel, notamment à un niveau de rejet respectant les dispositions règlementaires en vigueur, en particulier à un rejet qui soit non détectable par des moyens conventionnels de contrôle de l'ozone atmosphérique. Or, ce rapport est cependant suffisant pour permettre un lavage efficace à très basse température selon le procédé de l'invention.

Selon certains modes de réalisation avantageux, au moins un débit d'ozone (O₃) gazeux introduit dans un -notamment dans chaque- compartiment du tunnel est tel que le rapport de ce débit d'ozone (O₃) gazeux, exprimé en kilogramme d'ozone gazeux introduit par heure dans l'un des compartiments, sur la masse d'eau consommée par heure dans le tunnel de lavage est compris entre 3,0 10⁻⁶ et 6,0 10⁻⁶, notamment compris entre 3,7 10⁻⁶ et 4,6 10⁻⁶.

Selon certains modes de réalisation, la mise en œuvre du procédé selon l'invention ne requiert aucune modification structurelle d'un tunnel de lavage connu de l'art antérieur, le débit d'ozone gazeux étant introduit dans au moins un compartiment du tunnel de lavage en empruntant une voie d'entrée d'au moins un agent -notamment un agent détergent et/ dégraissant- de lavage dans ledit au moins un compartiment d'un tunnel de lavage conventionnel. Dans un procédé selon l'invention, le débit d'ozone gazeux est introduit -notamment injectée, en particulier par bullage- dans ladite composition de lavage et au contact de ladite composition de lavage. Rien n'empêche cependant de prévoir qu'au moins un compartiment du tunnel de lavage présente une voie spécifique d'entrée du débit d'ozone gazeux dans au moins un -notamment dans chaque- compartiment du tunnel de lavage, dans et au contact de ladite composition de lavage.

Chaque compartiment du tunnel de lavage est dimensionné de façon à présenter une contenance maximale de textiles comprise entre 25 kg et 100 kg de textile par compartiment, notamment comprise entre 35 kg et 75 kg, en particulier de l'ordre de 50 kg de textile par compartiment. Dans un procédé selon l'invention, le débit de ladite composition de lavage est adapté en conséquence. Dans un procédé selon l'invention, le débit d'ozone (O₃) gazeux est donc également adapté en conséquence.

Ainsi, le débit d'ozone (O₃) gazeux est introduit par injection dans ladite composition de lavage et à son contact. Dans ces modes de réalisation avantageux, on utilise une voie préexistante d'introduction d'agent(s) de lavage dans ladite composition de lavage, sans aucune modification structurelle du tunnel de lavage préexistant.

Selon certains modes de réalisation, ladite composition de lavage comprend au moins un agent tensioactif. Selon certains modes de réalisation, ladite composition de lavage comprend au moins un agent enzymatique, notamment un agent enzymatique actif à très basse température. Au moins un -notamment chaque- agent enzymatique est choisi dans le groupe formé des lipases et des protéases.

Selon certains modes de réalisation avantageux, ladite composition de lavage est exempte d'hypochlorite de sodium (NaCℓO ou « eau de javel »). Cela étant, selon certains modes de réalisation très particuliers, notamment selon certains modes de réalisation d'un procédé de lavage de textiles nécessitant un lavage intensif de textiles particulièrement sales, souillés, tachés, voire bactériologiquement contaminés, rien n'empêche de prévoir un ajout d'eau de javel dans ladite composition de lavage, le procédé de lavage étant mis en œuvre à très basse température. À titre d'exemple, un tel lavage intensif de textiles utilisés en milieu hospitalier est peu fréquent et n'intervient que dans moins de 1% des cas de lavage de textiles.

Selon certains modes de réalisation, le tunnel de lavage comprenant un deuxième sous ensemble, dit tronçon de rinçage, de compartiments successifs dans lesquels les textiles sont entrainés en déplacement et en contact avec une composition, dite composition de rinçage, aqueuse présentant une concentration de détergent inférieure à la concentration en détergent de ladite composition de lavage et adaptée pour rincer les textiles entrainés en déplacement dans ledit tronçon de rinçage et pour former un flux de textiles lavés -et désinfectés- et sensiblement exempts d'agent détergent en aval dudit tronçon de rinçage ;
ledit tronçon de rinçage s'étendant en aval dudit tronçon de lavage ;
un débit d'ozone (O₃) gazeux est introduit dans au moins un compartiment dudit tronçon de rinçage, le débit d'ozone gazeux étant introduit dans et au contact de ladite composition de rinçage.

Avantageusement et selon l'invention, le débit d'ozone (O₃) gazeux est introduit par bullage du débit d'ozone (O₃) gazeux dans et au contact de ladite composition de rinçage.

Selon certains modes de réalisation avantageux, ledit tronçon de rinçage s'étend d'amont en aval entre :
- un premier compartiment amont de rinçage équipé d'un dispositif de vidange de ladite composition de rinçage, le dispositif de vidange permettant de diriger ladite composition de rinçage vers l'extérieur du tunnel de lavage vers l'extérieur du tunnel de lavage, et ;
- un ultime compartiment aval de rinçage équipé d'une entrée d'une eau de rinçage dans le tunnel de lavage ;
de sorte que ladite composition de rinçage s'écoule à contrecourant dans ledit tronçon de rinçage, par rapport au flux de textiles en déplacement dans le tunnel de lavage.

Selon ces modes de réalisation avantageux, ladite composition de rinçage s'écoule de l'aval vers l'amont dudit tronçon de rinçage, c'est-à-dire à contrecourant des textiles entrainés en déplacement dans le tunnel de lavage et dans ledit tronçon de rinçage.

Rien n'empêche cependant de prévoir que, selon d'autres modes de réalisation, ledit tronçon de rinçage s'étende d'amont en aval entre une entrée amont de l'eau de rinçage et une sortie aval de ladite composition de rinçage.

Selon certains modes de réalisation avantageux, le débit d'ozone (O₃) gazeux introduit dans un compartiment dudit tronçon de rinçage est tel que le rapport de ce débit d'ozone (O₃) gazeux, exprimé en kilogramme d'ozone gazeux introduit par heure dans ce compartiment, sur le flux de textile circulant dans le tunnel de lavage, exprimé en kilogramme de textiles par heure, notamment en kilogramme de textiles lavés par heure, est compris entre 1,0 10⁻⁵ et 2,0 10⁻⁵. Selon ces modes de réalisation avantageux, le débit d'ozone (O₃) gazeux introduit dans un -notamment dans chaque- compartiment(s) dudit tronçon de rinçage est tel que le rapport de ce débit d'ozone (O₃) gazeux -exprimé en kilogramme d'ozone gazeux introduit par heure dans l'un de ces compartiments- sur la masse d'eau consommée par heure dans le tunnel de lavage est compris entre 3,0 10⁻⁶ et 6,0 10⁻⁶, notamment compris entre 3,7 10⁻⁶ et 4,6 10⁻⁶.

Selon certains modes de réalisation avantageux, le débit d'ozone (O₃) gazeux est introduit dans ledit tronçon de rinçage, dans un compartiment dudit tronçon de rinçage s'étendant en extrémité amont dudit tronçon de rinçage.

Selon ces modes de réalisation, ladite composition de rinçage introduite dans ledit tronçon de rinçage est de l'eau sensiblement pure -c'est-à-dire de l'eau prélevée à partir d'un réseau de distribution d'eau de consommation-, ladite composition de rinçage se chargeant notamment d'agent(s) détergent(s) au contact des textiles circulant dans ledit tronçon de rinçage.

Dans un procédé selon l'invention, ladite composition de rinçage est à une température inférieure à 35°C, notamment comprise entre 15°C et 35°C, de préférence comprise entre 22°C et 28°C, plus préférentiellement de l'ordre de 25°C. Les inventeurs ont découvert que, en dépit de la température basse de ladite composition de rinçage, il est possible d'obtenir une désinfection des textiles qui soit compatible avec les exigences règlementaires en matière de textiles utilisés en milieu hospitalier et destinés à être utilisés en milieu hospitalier.

Dans certains modes de réalisation d'un procédé selon l'invention, ledit tronçon de lavage du tunnel de lavage comprenant un groupe, dit tronçon de prélavage, de compartiments successifs s'étendant en extrémité amont dudit tronçon de lavage ;
dont un premier compartiment amont formant une trémie d'introduction des textiles à laver dans le tunnel de lavage ;
un débit d'une composition aqueuse et un débit d'au moins un agent détergent -notamment un débit d'au moins un agent détergent de lavage- sont introduits dans ce premier compartiment de façon à former dans ledit tronçon de prélavage, un débit d'une composition, dite composition de prélavage, circulant dans ledit tronçon de prélavage, selon la même direction principale et selon le même sens, c'est-à-dire d'amont en aval, que la direction principale et que le sens du flux des textiles entrainés en déplacement dans ledit tronçon de prélavage et dans le tunnel de lavage.

Dans un procédé selon l'invention, il n'est pas nécessaire de procéder à une introduction -notamment une introduction volontaire- d'un débit d'ozone gazeux dans ledit tronçon de prélavage. Dans un procédé selon l'invention, il n'est procédé à aucune introduction -notamment une introduction volontaire- d'un débit d'ozone gazeux dans ledit tronçon de prélavage. Ladite composition de prélavage est exempte d'ozone.

Dans certains modes de réalisation, on introduit dans ladite composition de neutralisation, au moyen d'une pompe doseuse, une quantité d'acide peracétique correspondant à de 0,3 g à 1,0 g -notamment de l'ordre de 0,4 g- par kilogramme de textiles circulant dans le tunnel, d'une solution aqueuse d'acide peracétique à une concentration volumique de l'ordre de 15% (v/v).

Selon certains modes de réalisation avantageux, le débit d'ozone (O₃) gazeux introduit dans ledit compartiment de neutralisation est tel que le rapport de ce débit d'ozone (O₃) gazeux -exprimé en kilogramme d'ozone gazeux introduit par heure dans ledit compartiment de neutralisation- sur le flux de textile circulant dans le tunnel -exprimé en kilogramme de textile par heure, notamment en kilogramme de textiles lavés par heure- est compris entre 1,0 10⁻⁵ et 2,0 10⁻⁵. Selon ces modes de réalisation avantageux, le débit d'ozone (O₃) gazeux introduit dans ledit compartiment de neutralisation est ajusté de façon que le rapport de ce débit d'ozone (O₃) gazeux -exprimé en kilogramme d'ozone gazeux introduit par heure dans ledit compartiment de neutralisation-sur la masse d'eau consommée par heure dans le tunnel de lavage est compris entre 3,0 10⁻⁶ et 6,0 10⁻⁶, notamment compris entre 3,7 10⁻⁶ et 4,6 10⁻⁶.

Selon certains modes de réalisation, le tunnel de lavage comprend successivement d'amont en aval, ledit tronçon de prélavage, ledit tronçon de lavage, ledit tronçon de rinçage et ledit compartiment de neutralisation.

Selon certains modes de réalisation, le tunnel de lavage s'étend à partir d'un premier compartiment amont d'introduction de textiles dans le tunnel de lavage et jusqu'à un dernier compartiment aval de sortie de textiles lavés et désinfectés. Selon certains modes de réalisation, rien n'empêche de prévoir un dispositif aval d'essorage des textiles sortant du dernier compartiment aval du tunnel de lavage, notamment dudit compartiment de neutralisation.

Ainsi, le procédé selon l'invention est susceptible de pouvoir être adapté à tout type de tunnel de lavage industriel connu en lui-même, sans modification majeure de ce dernier autre qu'un raccordement d'un générateur d'un débit d'ozone gazeux et d'une entrée de ce débit d'ozone gazeux dans au moins un compartiment de ce tunnel de lavage. Il suffit de pouvoir effectuer un tel raccordement et de pouvoir maintenir la température dans le tunnel de lavage, notamment la température de ladite composition de prélavage, la température de ladite composition de lavage, la température de ladite composition de rinçage et de ladite composition de neutralisation, chacune à une température (identiques ou différentes les unes des autres) inférieure à 35°C.

L'invention s'étend aussi à un dispositif, dit tunnel, de lavage, du type formé d'une pluralité de compartiments s'étendant en série et adaptés pour pouvoir entrainer des textiles en déplacement continu, successivement d'amont en aval au travers de chaque compartiment de la pluralité de compartiments ; le tunnel de lavage comprenant :
- des moyens aptes à maintenir la température d'un débit d'une composition, dite composition de lavage, aqueuse comprenant au moins un agent tensioactif, à une température inférieure à 35°C, notamment comprise entre 15°C et 35°C, de préférence comprise entre 22°C et 28°C, plus préférentiellement de l'ordre de 25°C ;
   - au moins un générateur d'ozone gazeux apte à délivrer un débit d'ozone (O₃) gazeux dans au moins un compartiment du tunnel de lavage, -notamment par bullage- dans et au contact de ladite composition de lavage.
Le tunnel de lavage se caractérise en ce qu'il comprend un compartiment aval, dit compartiment de neutralisation, s'étendant en aval dudit tronçon de rinçage, ledit compartiment de neutralisation est équipé d'une entrée d'un débit d'ozone gazeux produit par un générateur d'ozone gazeux bullant dans ledit compartiment de neutralisation qui comporte aussi une pompe doseuse délivrant une quantité d'un lessiviel de lavage et/ou de désinfection.

Selon certains modes de réalisation, la pluralité de compartiments est formée de quatorze compartiments successifs et le tunnel de lavage comprend quatre générateurs d'ozone gazeux, chaque générateur d'ozone gazeux étant disposé pour introduire un débit d'ozone gazeux dans un compartiment distinct.

Selon certains modes de réalisation, chaque générateur d'ozone gazeux est adapté pour introduire dans un compartiment, un débit d'ozone (O₃) gazeux tel que le rapport de ce débit d'ozone (O₃) gazeux, exprimé en kilogramme d'ozone gazeux introduit par heure dans ce compartiment sur le flux de textile circulant dans le tunnel de lavage, exprimé en kilogramme de textile par heure -notamment en kilogramme de textiles lavés par heure-, est compris entre 1,0 10⁻⁵ et 2,0 10⁻⁵.

L'invention concerne également un procédé et un dispositif de lavage industriel caractérisés, en combinaison ou non, par tout ou partie des caractéristiques mentionnées ci-dessus ou ci-après. Quelle que soit la présentation formelle qui en est donnée, sauf indication contraire explicite, les différentes caractéristiques mentionnées ci-dessus ou ci-après ne doivent pas être considérées comme étroitement ou inextricablement liées entre elles, l'invention pouvant concerner l'une seulement de ces caractéristiques structurelles ou fonctionnelles, ou une partie seulement de ces caractéristiques structurelles ou fonctionnelles, ou une partie seulement de l'une de ces caractéristiques structurelles ou fonctionnelles, ou encore tout groupement, combinaison ou juxtaposition de tout ou partie de ces caractéristiques structurelles ou fonctionnelles.

D'autres buts, caractéristiques et avantages de l'invention apparaîtront à la lecture de la description suivante de certains modes de réalisation possibles mais non limitatifs de l'invention, dans lesquels :

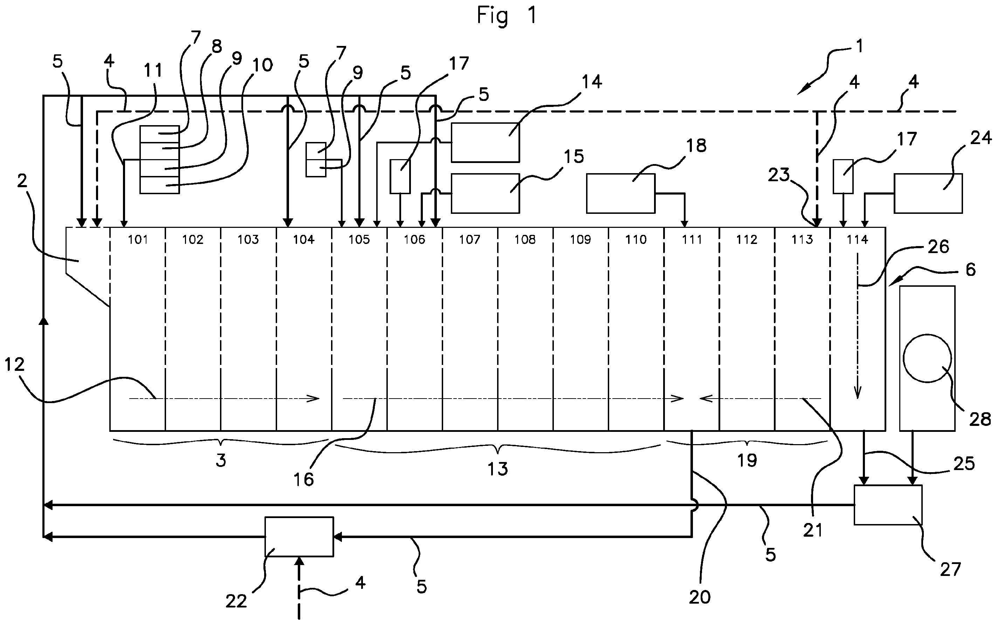

[Fig 1] la figure 1 unique est une représentation schématique d'un mode de réalisation particulier d'un tunnel de lavage adapté pour mettre en œuvre un mode de réalisation particulièrement avantageux d'un procédé de lavage industriel selon l'invention.

Le tunnel 1 de lavage représenté figure 1 s'étend longitudinalement entre une trémie 2 d'entrée de textiles à laver dans le tunnel 1 de lavage et une sortie 6 de textiles lavés et désinfectés vers l'extérieur du tunnel 1 de lavage. Le tunnel 1 de lavage est formé d'un enchainement de 14 compartiments
101,102,103,104,105,106,107,108,109,110,111,112,113,114 adaptés pour pouvoir être traversés successivement par les textiles introduits par la trémie 2 d'entrée.

Chaque compartiment 101,102,...114 comprend un tambour de forme sensiblement cylindrique de révolution et entrainé en rotation selon un axe de rotation parallèle à l'axe d'allongement du tunnel 1 de lavage et conformé pour permettre une progression des textiles d'un compartiment au compartiment aval immédiatement adjacent. Les tambours de chaque compartiment 101,102,... 114 sont alignés axialement et entrainés en rotation selon cet axe d'alignement selon une séquence de rotations prédéterminée, notamment alternativement dans les deux sens de rotation. Chaque compartiment 101,102,... 114 est conformé pour pouvoir mettre les textiles en contact avec au moins un débit d'au moins une composition de lavage circulant dans le tunnel 1 de lavage. Chaque compartiment 101,102,...114 est dimensionné de façon à pouvoir recevoir une quantité optimale de textiles comprise entre 25 kg et 100 kg de textile par compartiment, notamment comprise entre 35 kg et 75 kg, en particulier de l'ordre de 50 kg de textile par compartiment. Dans le mode de réalisation représenté, le tunnel 1 de lavage (Senking 14x50, Jensens) présente une capacité de lavage de textiles de 50 kg par compartiment. La période nécessaire au lavage de textiles introduits en amont du tunnel 1 de lavage est de comprise entre 20 min et 40 min, notamment de l'ordre de 28 min.

Le tunnel 1 de lavage représenté en figure 1 présente un premier tronçon, dit tronçon 3 de prélavage, de quatre compartiments 101,102,103,104 successifs, dans lequel le premier compartiment 101 dudit tronçon 3 de prélavage, est équipé de la trémie 2 d'introduction de textiles dans le tunnel 1 de lavage. La trémie 2 est adaptée pour pouvoir recevoir les textiles à laver et un débit 4 d'eau de consommation prélevé sur un réseau de distribution d'eau. La trémie 2 est aussi adaptée pour pouvoir recevoir un débit 5 d'eau de lavage recyclée à partir du tunnel 1 de lavage. Le premier compartiment 101 dudit tronçon 3 de prélavage comprend une entrée 11 d'au moins un débit de lessiviel(s) 7,8,9,10 de façon à former une composition, dite composition 12 de prélavage, par mélange du débit 4 d'eau prélevé sur un réseau de distribution d'eau, du débit 5 d'eau recyclée et d'au moins l'un des débits de lessiviels 7,8,9,10, ladite composition 12 de prélavage s'écoulant successivement dans les compartiments 102,103 et 104 au contact des textiles entrainés en déplacement dans le tunnel 1 de lavage.

Au moins l'un des lessiviels 7,8,9,10 peut être un lessiviel 7 détergent enzymatique *(« Garo^{®}sive Deter »,* Gaches Chimie Spécialités, France). Un tel détergent 7 enzymatique peut comprendre au moins une enzyme active à très basse température. Un tel détergent 7 enzymatique peut comprendre de l'ordre de 5% à 15% de tensioactifs anioniques et de 15% à 30% de tensioactifs non-ioniques. De manière habituelle, on ajoute du *« Garo^{®}sive Deter »* à raison de 2,5 à 3,5 mL par kilogramme de textile sec s'écoulant dans le premier compartiment 101. Au moins l'un des lessiviels 7,8,9,10 peut être un lessiviel 8 renforçateur dégraissant contenant des tensioactifs non ioniques, notamment au moins un alcool éthoxylé, dans une proportion supérieure à 30%. Au moins l'un des lessiviels 7,8,9,10 peut être un lessiviel renforçateur 9 alcalin *(« Garo^{®}Boost »,* Gaches Chimie Spécialités, France). De manière habituelle, on ajoute le « *Garo^{®}Boost »* à raison de 1,0 à 1,5 mL par kilogramme de textile sec s'écoulant dans le premier compartiment 101. Dans certains modes de réalisation, au moins l'un des lessiviels 7,8,9,10 peut être de l'eau 10 de javel.

Dans le compartiment 104 dudit tronçon 3 de prélavage, il est procédé à un apport d'un débit 5 d'eau de recyclage.

La température de ladite composition 3 de prélavage, des textiles entrainés en déplacement dans ledit tronçon 3 de prélavage régnant dans les compartiments 101,102,103,104 de prélavage est maintenue à une valeur inférieure à 35°C, notamment comprise entre 15°C et 35°C, de préférence comprise entre 22°C et 28°C, plus préférentiellement de l'ordre de 25°C.

Le tunnel 1 de lavage représenté en figure 1 présente un deuxième tronçon, dit tronçon 13 de lavage, de compartiments 105,106,107,108,109,110 contigus successifs, dans lequel le premier compartiment 105 amont recevant ladite composition 12 de prélavage est équipé :
- d'une entrée d'un débit 5 d'eau de recyclage ;
- d'une entrée d'un débit de lessiviel 7 détergent enzymatique ;
- d'une entrée d'un débit de renforçateur 9 alcalin.
Le débit de ladite composition 12 de prélavage circulant dans le compartiment 105 dudit tronçon 13 de lavage reçoit aussi un débit d'ozone gazeux formé par un premier générateur 14 d'ozone gazeux, ce par quoi une composition, dite composition 16 de lavage, aqueuse est formée dans ledit tronçon 13 de lavage. Le générateur 14 d'ozone gazeux est adapté pour pouvoir délivrer dans le premier compartiment 105 amont dudit tronçon 13 de lavage, un débit d'ozone gazeux de valeur comprise entre 20 g/h et 25 g/h d'ozone gazeux.

Le deuxième compartiment 106 amont dudit tronçon 13 de lavage reçoit un débit d'ozone gazeux formé par un deuxième générateur 15 d'ozone gazeux. Le débit d'ozone gazeux est introduit par bullage dans ladite composition 16 de lavage. Le deuxième compartiment 106 amont dudit tronçon 13 de lavage reçoit une quantité d'un lessiviel 17 de lavage et/ou de désinfection, correspondant à une quantité de l'ordre de 4,0 g de solution aqueuse d'acide peracétique à 15% (v/v), par kilogramme de textiles introduits et circulant dans ledit tronçon 13 de lavage. La quantité de lessiviel 17 de lavage et/ou de désinfection est délivré dans ladite composition 16 de lavage au moyen d'une pompe doseuse. Ladite composition 16 de lavage circule longitudinalement dans ledit tronçon 13 de lavage selon une direction globalement parallèle et dans le même sens que les textiles.

La température de ladite composition 16 de lavage, des textiles entrainés en déplacement longitudinal dans les compartiments 105, ...110 dudit tronçon 13 de lavage est maintenue à une valeur inférieure à 35°C, notamment comprise entre 15°C et 35°C, de préférence comprise entre 22°C et 28°C, plus préférentiellement de l'ordre de 25°C. Les textiles sont entrainés en déplacement longitudinalement dans ledit tronçon 13 de lavage du tunnel 1 de lavage successivement dans les compartiments 105,106,107,108, 109 et 110. Ladite composition 16 de lavage s'écoule dans ledit tronçon 13 de lavage selon le même sens, du compartiment 105 amont en direction du compartiment 110 aval.

Le tunnel 1 de lavage représenté en figure 1 présente un troisième tronçon, dit tronçon 19 de rinçage, de compartiments 111,112, 113 successifs, dans lequel le premier compartiment 111 amont recevant ladite composition 16 de lavage est équipé d'une entrée d'un débit d'ozone gazeux par bullage produit par un troisième générateur 18 d'ozone gazeux. Le premier compartiment 111 dudit tronçon 19 de rinçage est équipé d'un dispositif 20 de vidange de ladite composition 16 de lavage. Ladite composition 16 de lavage est collectée dans un bac 22 de stockage et/ou de traitement en vue de son recyclage dans un débit 5 d'eau de recyclage. Dès lors que la température de ladite composition 16 de lavage est inférieure à 35°C dans ledit tronçon 13 de lavage, aucune opération de refroidissement de ladite composition 16 de lavage préalable à son rejet n'est à prévoir. Dans ledit tronçon 19 de rinçage, les textiles en cours de lavage sont entrainés en déplacement de l'amont vers l'aval du tunnel 1 de lavage, c'est-à-dire du compartiment 111 amont dudit tronçon 19 de rinçage vers le compartiment 113 aval dudit tronçon 19 de rinçage. Ledit tronçon 19 de rinçage présente un compartiment 113 aval présentant une entrée 23 d'un débit 4 d'une eau de rinçage prélevé sur un réseau de distribution d'eau de consommation, s'écoulant dans ledit tronçon 19 de rinçage à partir du compartiment 113 aval vers le dispositif 20 de vidange du compartiment 111 amont dudit tronçon 19 de rinçage. Dans le mode de réalisation représenté, ladite eau 21 de rinçage s'écoule dans ledit tronçon 19 de rinçage à contrecourant des textiles en cours de lavage et entrainés en déplacement dans le tunnel 1 de lavage et dans ledit tronçon 19 de rinçage de l'amont vers l'aval.

Le tunnel 1 de lavage représenté en figure 1 présente un compartiment aval, dit compartiment 114 de neutralisation, présentant une ouverture 6 de sortie des textiles lavés en extrémité aval du tunnel 1 de lavage. Ledit compartiment 114 de neutralisation est équipé d'une entrée d'un débit d'ozone gazeux produit par un quatrième générateur 24 d'ozone gazeux bullant dans ledit compartiment 114 de neutralisation. Il est aussi équipé d'une pompe doseuse délivrant une quantité d'un lessiviel 17 de lavage et/ou de désinfection, correspondant à une quantité de l'ordre de 0,4 g de solution aqueuse d'acide peracétique à 15% (v/v), par kilogramme de textiles circulant dans ledit compartiment 114 de neutralisation de façon à former une composition, dite composition 26 de neutralisation, aqueuse circulant dans ledit compartiment 114 de neutralisation au contact des textiles entrainés dans ledit compartiment 114 de neutralisation. Ledit compartiment 114 de neutralisation est équipé d'un dispositif 25 de vidange de ladite composition 26 de neutralisation, adapté pour permettre une collecte de ladite composition 26 de neutralisation dans un bac 27 de stockage et/ou de traitement en vue de son recyclage dans un débit 5 d'eau de recyclage.

Selon certains modes de réalisation, le tunnel 1 de lavage comprend un dispositif 28 d'essorage des textiles extraits dudit compartiment 114 de neutralisation, les textiles extraits étant lavés, propres et désinfectés. Selon certains modes de réalisation, au moins une étape d'essorage des textiles est réalisée par compression.

Dans un procédé de lavage industriel de textiles d'origine hospitalière ou d'autre origine mis en œuvre au moyen d'un tunnel 1 de lavage représenté en figure 1 et comprenant une succession de 14 compartiments 101,102,...,114 contigus dimensionnés pour pouvoir recevoir de l'ordre de 50 kg de textiles par compartiment, on réalise le lavage d'une quantité de l'ordre de 1500 kg -notamment de 1400 kg- de textiles par heure. Quatre générateurs 14,15,18,24 d'ozone gazeux permettent de former extemporanément chacun un débit d'ozone gazeux de valeur comprise entre 20g/h et 25 g/h introduit dans un compartiment 105,106,111,114 du tunnel 1 de lavage -notamment chacun un débit d'ozone gazeux de 21,5 g/h, pour un total de 86 grammes d'ozone gazeux par heure-. Par exemple, le lavage industriel de textiles d'origine hospitalière mis en œuvre au moyen d'un tunnel 1 de lavage représenté en figure 1 à raison de 1400 kg de textile par heure et un débit d'ozone gazeux de 86 g/h correspond à une introduction de 61,4 mg d'ozone gazeux par kilogramme de linge. À titre d'autre exemple, un procédé de lavage industriel de textiles mis en œuvre au moyen d'un tunnel de lavage comprenant une succession de 8 compartiments contigus dimensionnés pour pouvoir recevoir de l'ordre de 25 kg de textiles par compartiment, permet de réaliser le lavage d'une quantité de l'ordre de 400 kg de tels textiles par heure. Trois générateurs d'ozone gazeux permettent de former extemporanément chacun un débit d'ozone gazeux de valeur de l'ordre de 21,5 g/h, pour un total de 64,5 grammes d'ozone gazeux par heure. Le lavage industriel de textiles mis en œuvre au moyen d'un tel tunnel de lavage correspond à une introduction de 161 mg d'ozone gazeux par kilogramme de linge. Du fait de l'introduction de ces débits d'ozone gazeux, chacune des étapes du procédé de lavage mise en œuvre dans les compartiments successifs du tunnel de lavage est réalisée à très basse température, notamment à une température inférieure à 35°C, de préférence à une température de l'ordre de 25°C pour une qualité de lavage maintenue en comparaison d'un lavage réalisé à une température comprise entre 60°C et 80°C. Du fait de l'apport des débits d'ozone gazeux, la consommation d'eau exprimée en litres d'eau utilisée par kilogramme de textile est ramenée à 3,6 L, représentant une économie d'eau de l'ordre de 25% par rapport à un procédé de lavage mise en œuvre à haute température et sans ozone. Du fait de l'apport dans le tunnel de lavage d'une quantité totale d'acide peracétique correspondant à de 3,5 g à 6,0 g -notamment de l'ordre de 4,0 g- par kilogramme de textiles introduits dans le tunnel de lavage, d'une solution aqueuse d'acide peracétique à une concentration volumique de l'ordre de 15% (v/v), combiné aux débits d'ozone gazeux, il est possible d'obtenir une désinfection poussée des textiles à une température inférieure à 35°C, notamment comprise entre 15°C et 35°C, de préférence comprise entre 22°C et 28°C, plus préférentiellement de l'ordre de 25°C, alors que la propriété désinfectante de l'acide peracétique à ce dosage, n'est recherchée dans un procédé de lavage industriel de textiles, uniquement pour des températures de lavage supérieures à 40°C. Un tel lavage et une telle désinfection est obtenue sans détérioration sensible des textiles lavés et désinfectés. Dans un tel procédé, une phase amont de prélavage des textiles introduits en continu dans le tunnel 1 de lavage est réalisée à très basse température en absence d'ozone gazeux, suivie d'une phase de lavage de ces textiles à très basse température en présence d'un débit d'ozone gazeux, suivie d'une phase de rinçage de ces textiles à très basse température en présence d'un débit d'ozone gazeux et suivie d'une phase de neutralisation à très basse température et le cas échéant de désinfection de ces textiles en présence d'un débit d'ozone gazeux.

Le procédé selon l'invention permet d'obtenir à très basse température, c'est-à-dire à une température inférieure à 35°C, notamment comprise entre 15°C et 35°C, de préférence comprise entre 22°C et 28°C, plus préférentiellement de l'ordre de 25°C, une qualité de lavage et de désinfection identique à un lavage conventionnel réalisé à haute température comprise entre 60°C et 80°C.

Le procédé de lavage à très basse température selon l'invention permet de réaliser une économie substantielle de l'énergie nécessaire au chauffage -limité, à très basse température inférieure à 35°C- des compositions de ladite composition de lavage, de ladite composition de prélavage et de ladite composition de rinçage. Une économie substantielle, estimée à de l'ordre de 0,35 KWh à de l'ordre de 0,4 KWh par kilogramme de textiles lavés, est réalisée. Pour un coût estimé de 3 centimes d'euro par KWh, une économie substantielle, de l'ordre de 1,2 centime d'euro par kilogramme de textiles lavés, est réalisée sur la facture d'énergie. Le procédé de lavage à très basse température selon l'invention permet aussi, du fait de cette moindre consommation d'énergie, une moindre émission de dioxyde de carbone (CO₂) dans l'atmosphère.

En outre, du fait de l'utilisation d'au moins un débit d'ozone gazeux, de moindres quantités de tensioactifs sont nécessaires pour obtenir un lavage satisfaisant et de qualité équivalente à un lavage obtenu à haute température. Il en résulte un besoin moindre de rinçage à l'eau et par conséquence une économie d'eau de rinçage. Une telle économie est évaluée à de l'ordre de 25% de la quantité d'eau nécessaire à la mise en œuvre d'un procédé de lavage conventionnel, sans utilisation d'ozone gazeux. Considérant la consommation d'eau totale nécessaire pour la mise en œuvre d'un procédé de lavage conventionnel égale à de l'ordre de 5 L/kg de textiles, la consommation d'eau totale nécessaire pour la mise en œuvre d'un procédé de lavage selon l'invention a été réduite à 3,6 litres d'eau par kilogramme de textiles lavés. Pour une quantité de textiles lavés et désinfectés de l'ordre de 10 tonnes par jour -quantité normale pour un hôpital- une économie de 10 m³ d'eau par jour est réalisée.

Le procédé de lavage selon l'invention est efficace sur tout type de salissure. Il peut s'agir de salissures particulaires occasionnées par de la terre, de la suie ou de la poussière. Il peut s'agir de salissures grasses, notamment provenant de l'alimentation - telles que des taches de beurre et/ou d'huile - ou provenant de la vie courante -telles que des taches de maquillage, de fond de teint-. Il peut s'agir de salissures d'origines diverses et variées mais sensibles aux enzymes -telles que les taches de sang, des taches d'herbe, des taches de jaune d'œuf-. Il peut s'agir de salissures oxydables sous la forme de taches de café, de taches de vin ou de taches de jus de fruits divers, sensibles à l'action du(des) agent(s) détergent(s) et/ou dégraissant(s). Il peut s'agir de salissures de nature organique, telles que de la transpiration, des urines, des matières fécales, notamment.

### Désinfection

La mise en culture à 30°C de la flore aérobie mésophile prélevée sur boite de 25 cm² en milieu solide, par contact d'un textile traité conformément à un procédé de lavage selon l'invention révèle un dénombrement inférieur à 1 unité, les exigences légales en termes de flore aérobie mésophile étant au plus de 25 unités. La mise en culture à 30°C de la flore coliforme totale prélevée sur boite de 25 cm² en milieu solide, par contact d'un tel textile traité par un procédé de lavage selon l'invention révèle un dénombrement inférieur à 1 unité, les exigences légales en termes de flore coliforme totale étant une absence d'une telle flore. Les exigences en termes de désinfection sont parfaitement remplies par le procédé de lavage selon l'invention.

### Efficacité de lavage

L'efficacité du procédé de lavage industriel de textiles à très basse température selon l'invention est évaluée par le CTTN-IREN (CTTN - Institut de Recherche sur l'Entretien et le Nettoyage, Ecully, France) par analyse en aveugle de pièces de coton de référence tachées par différentes souillures (telles que des souillures tanniques, des souillures grasses, des souillures pigmentaires, des souillures protéiniques, notamment) et lavées par un procédé selon l'invention. L'efficacité du procédé de lavage à très basse température selon l'invention est également validée par le CTTN-IREN, par comparaison avec un procédé de lavage industriel en tunnel mis en œuvre à 80°C. Le procédé de lavage à très basse température selon l'invention est au moins aussi performant que le procédé de lavage industriel mis en œuvre à 80°C pour ce qui concerne l'élimination des souillures.

### Préservation des propriétés physiques des textiles traités

L'agressivité mécanique et chimique du procédé de lavage à très basse température selon l'invention vis-à-vis des textiles et la propriété du procédé de lavage à très basse température selon l'invention de préserver les propriétés physiques de ces textiles lors du lavage sont également évaluées par le CTTN-IREN par des analyses réalisées en aveugle. Une telle évaluation est réalisée par le CTTN-IREN au moyen de pièces de matériau tissé en coton présentant des caractéristiques chimiques, mécaniques et colorimétriques) prédéterminées et mesurables. Une telle évaluation permet de déterminer l'agressivité chimique et mécanique du procédé selon l'invention et son impact sur le toucher et l'usure de la pièce testée et la blancheur des textiles. L'usure des textiles du fait du lavage dépend de la nature des textiles traités. Elle varie selon que les textiles soient des textiles neuf ou usagés. Elle varie selon que les textiles soient des textiles blancs ou colorés. Elle varie selon qu'il s'agisse de textiles formés de fibres naturelles d'origine végétales -telles que par exemple les fibres de coton ou de lin-, selon qu'il s'agisse de textiles formés de fibres naturelles d'origine animale -telles que la laine et la soie-, selon qu'il s'agisse de textiles formés de fibres artificielles dérivées de fibres naturelles végétales -telles que par exemple le viscose ou l'acétate-, selon qu'il s'agisse de textiles formés de fibres artificielles totalement synthétiques -tels que par exemple des fibres polyester, des fibres polyacrylique ou des fibres polyamide-, ou selon qu'il s'agisse de textile formés de l'un de leurs mélanges. L'agressivité mécanique et chimique du procédé de lavage à très basse température selon l'invention est également évaluée par le CTTN-IREN, par comparaison avec un procédé de lavage industriel en tunnel de lavage mis en œuvre à 80°C. Le procédé de lavage industriel à très basse température selon l'invention permet une diminution d'usure des textiles de l'ordre de 9% en comparaison d'un procédé de lavage de l'art antérieur mis en œuvre à une température comprise entre 60°C et 80°C, à qualité d'eau et état d'usure du tunnel de lavage comparables. Le procédé de lavage industriel à très basse température selon l'invention permet également une diminution de grisage des textiles de l'ordre de 45% en comparaison d'un procédé de lavage de l'art antérieur mis en œuvre à une température comprise entre 60°C et 80°C, toutes autres conditions de lavage étant comparables, notamment à qualité d'eau et état d'usure du tunnel de lavage comparables.

### Avantage environnemental

Du fait d'une utilisation de ladite composition de prélavage, de ladite composition de lavage, de ladite composition de rinçage et de ladite composition de neutralisation, maintenues à une température inférieure à 35°C, notamment de l'ordre de 25°C, les rejets de tout ou partie de ces compositions aqueuses ne nécessitent pas d'être refroidies avant rejet à l'égout. À cet égard, la règlementation impose que de tels rejets soient effectuée à une température inférieure à 30°C. Par ailleurs, du fait d'une utilisation de ladite composition de prélavage, de ladite composition de lavage, de ladite composition de rinçage et de ladite composition de neutralisation, maintenues à une température inférieure à 35°C, notamment de l'ordre de 25°C, le procédé selon l'invention permet de réaliser une économie d'énergie de chauffage et de limiter les émissions de CO₂ dans l'atmosphère. Il permet aussi de réduire le temps nécessaire pour que ladite composition de lavage, ladite composition de rinçage et ladite composition de prélavage atteignent la température de lavage. A cet égard, il permet de réduire de 15 minutes à 20 minutes le temps de montée en température du tunnel de lavage.

Selon certains modes de réalisation, les textiles à laver sont sélectionnés parmi des textiles collectés en établissement de soins, notamment en milieu hospitalier. Il peut s'agir de tout textile, choisi parmi les textiles plats et les textiles d'habillement. Il peut s'agir de textiles blancs ou de textiles de couleur.

L'invention peut faire l'objet de nombreuses variantes et applications autres que celles décrites ci-dessus. En particulier, il va de soi que sauf indication contraire les différentes caractéristiques structurelles et fonctionnelles de chacun des modes de réalisation décrits ci-dessus ne doivent pas être considérées comme combinées et/ou étroitement et/ou inextricablement liées les unes aux autres, mais au contraire comme de simples juxtapositions. En outre, les caractéristiques structurelles et/ou fonctionnelles des différents modes de réalisation décrits ci-dessus peuvent faire l'objet en tout ou partie de toute juxtaposition différente ou de toute combinaison différente. Par exemple, la forme du corps rigide, les dimensions du dispositif d'aide au perçage, notamment, peuvent être adaptés sans sortir de l'invention.

## Revendications

1. Procédé de lavage de textiles, dans lequel des textiles à laver sont entrainés en déplacement continu dans un tunnel (1) de lavage, d'amont en aval en traversant successivement une série de compartiments (101,102,...114) contigus formant le tunnel (1) de lavage ;
procédé dans lequel un débit d'une composition, dite composition (16) de lavage, aqueuse comprenant au moins un agent détergent, est mis en contact avec les textiles entrainés en déplacement, au moins dans un sous-ensemble, dit tronçon (13) de lavage, de compartiments successifs de la série de compartiments ;
ladite composition (16) de lavage présente une température inférieure à 35°C,
un débit d'ozone (O₃) gazeux est introduit dans au moins un compartiment (105,106,11,114) dudit tronçon (13) de lavage, le débit d'ozone gazeux étant introduit dans et au contact de ladite composition (16) de lavage,
**caractérisé en ce que** le tunnel (1) de lavage comprend un ultime compartiment, dit compartiment (114) de neutralisation, s'étendant en aval dudit tronçon (19) de rinçage etdans lequel les textiles entrainés en déplacement sont en contact avec une composition, dite composition (26) de neutralisation, aqueuse comprenantau moins un agent de neutralisation choisi dans le groupe formé des acidesfaibles ;
un débit d'ozone (O₃) gazeux est introduit dans ledit compartiment (114) de neutralisation, le débit d'ozone gazeux étant introduit dans et au contact de ladite composition (26) de neutralisation.

2. Procédé selon la revendication 1, **caractérisé en ce que** ladite composition de lavage comprend au moins une enzyme présentant une température d'activité optimale inférieure à 35°C.

3. Procédé selon l'une des revendications 1 ou 2, **caractérisé en ce qu'**un débit d'ozone (O₃) gazeux est introduit dans le tunnel (1) de lavage au moins dans un premier compartiment (105) amont dudit tronçon (13) de lavage.

4. Procédé selon l'une des revendications 1 à 3, **caractérisé en ce qu'**un débit d'ozone (O₃) gazeux est introduit dans le tunnel (1) de lavage dans un premier compartiment (105) amont dudit tronçon (13) de lavage et dans un deuxième compartiment (106) dudit tronçon (13) de lavage s'étendant immédiatement en aval de ce premier compartiment (105).

5. Procédé selon l'une des revendications 1 à 4, **caractérisé en ce qu'**au moins un débit d'ozone (O₃) gazeux est un débit continu d'ozone (O₃) gazeux.

6. Procédé selon l'une des revendications 1 à 5, **caractérisé en ce que** ladite composition de lavage comprend de l'acide peracétique.

7. Procédé selon l'une des revendications 1 à 6, **caractérisé en ce qu'**au moins un débit d'ozone (O₃) gazeux introduit dans au moins un compartiment du tunnel (1) de lavage est tel que le rapport de ce débit d'ozone (O₃) gazeux, exprimé en kilogramme d'ozone gazeux introduit par heure dans l'un des compartiments, sur le flux de textile circulant dans le tunnel, exprimé en kilogramme de textiles par heure, est compris entre 1,0 10⁻⁵ et 2,0 10⁻⁵.

8. Procédé selon l'une des revendications 1 à 7, **caractérisé en ce que** le débit d'ozone (O₃) gazeux introduit dans chaque compartiment du tunnel (1) de lavage est tel que le rapport de ce débit d'ozone (O₃) gazeux, exprimé en kilogramme d'ozone gazeux introduit par heure dans l'un des compartiments, sur la masse d'eau consommée par heure dans le tunnel (1) de lavage est compris entre 3,0 10⁻⁶ et 6,0 10⁻⁶.

9. Procédé selon l'une des revendications 1 à 8, **caractérisé en ce que** le tunnel (1) de lavage comprenant un deuxième sous ensemble, dit tronçon (19) de rinçage, de compartiments (11,112,113) successifs dans lesquels les textiles sont entrainés en déplacement et en contact avec une composition, dite composition (21) de rinçage, aqueuse présentant une concentration de détergent inférieure à la concentration en détergent de ladite composition (16) de lavage et adaptée pour rincer les textiles entrainés en déplacement dans ledit tronçon (19) de rinçage et pour former un flux de textiles lavés et sensiblement exempts d'agent détergent en aval dudit tronçon (19) de rinçage ;
ledit tronçon (19) de rinçage s'étendant en aval dudit tronçon (16) de lavage ;
un débit d'ozone (O₃) gazeux est introduit dans au moins un compartiment dudit tronçon (19) de rinçage, le débit d'ozone gazeux étant introduit dans et au contact de ladite composition (21) de rinçage.

10. Procédé selon la revendication 9, **caractérisé en ce que** ledit tronçon (19) de rinçage s'étend d'amont en aval entre :
- un premier compartiment (111) amont de rinçage équipé d'un dispositif (20) de vidange de ladite composition (21) de rinçage, le dispositif (20) de vidange permettant de diriger ladite composition (21) de rinçage vers l'extérieur du tunnel (1) de lavage, et ;
- un ultime compartiment (113) aval de rinçage équipé d'une entrée (23) d'une eau de rinçage dans le tunnel (1) de lavage ;
de sorte que ladite composition (21) de rinçage s'écoule à contrecourant dans ledit tronçon (19) de rinçage, par rapport au flux de textiles en déplacement dans le tunnel (1) de lavage .

11. Procédé selon l'une des revendications 9 ou 10, **caractérisé en ce que** le débit d'ozone (O₃) gazeux introduit dans un compartiment (111) dudit tronçon (19) de rinçage est tel que le rapport de ce débit d'ozone (O₃) gazeux, exprime en kilogramme d'ozone gazeux introduit par heure dans ce compartiment, sur le flux de textile circulant dans le tunnel (1) de lavage, exprimé en kilogramme de textiles par heure, est compris entre 1,0 10⁻⁵ et 2,0 10⁻⁵.

12. Procédé selon l'une des revendications 1 à 11, **caractérisé en ce que** le tunnel (1) de lavage comprenant un groupe, dit tronçon (3) de prélavage, de compartiments (101,102,103,104) successifs s'étendant en extrémité amont dudit tronçon (13) de lavage ;
dont un premier compartiment (101) amont formant une trémie (2) d'introduction des textiles à laver dans le tunnel (1) de lavage ;
un débit d'une composition (4,5) aqueuse et un débit d'au moins un agent (7) détergent sont introduits dans ce premier compartiment (101) de façon à former dans ledit tronçon (3) de prélavage, un débit d'une composition, dite composition (12) de prélavage, circulant dans ledit tronçon (3) de prélavage, selon la même direction principale et selon le même sens que la direction principale et que le sens du flux des textiles entrainés en déplacement dans ledit tronçon (12) de prélavage et dans le tunnel (1) de lavage.

13. Procédé selon l'une des revendications 1 à 12, **caractérisé en ce que** le débit d'ozone (O₃) gazeux introduit dans ledit compartiment (114) de neutralisation est tel que le rapport de ce débit d'ozone (O₃) gazeux, exprimé en kilogramme d'ozone gazeux introduit par heure dans ce compartiment sur le flux de textile circulant dans le tunnel (1) de lavage, exprimé en kilogramme de textiles par heure, est compris entre 1,0 10⁻⁵ et 2,0 10⁻⁵.

14. Dispositif, dit tunnel (1) de lavage, du type formé d'une pluralité de compartiments s'étendant en série et adaptés pour pouvoir entrainer des textiles en déplacement continu, successivement d'amont en aval au travers de chaque compartiment de la pluralité de compartiments selon le procédé d'une des revendications 1 à 13 ;
le tunnel (1) de lavage comprenant :
- des moyens aptes à maintenir la température d'un débit d'une composition, dite composition de lavage, aqueuse comprenant au moins un agent tensioactif, à une température inférieure à 35°C, notamment comprise entre 15°C et 35°C, de préférence comprise entre 22°C et 28°C, plus préférentiellement de l'ordre de 25°C ;
- au moins un générateur d'ozone gazeux apte à délivrer un débit d'ozone (O₃) gazeux dans au moins un compartiment du tunnel (1) de lavage, dans et au contact de ladite composition de lavage,
**caractérisé en ce que**, le tunnel (1) de lavage comprend un compartiment aval, dit compartiment (114) de neutralisation, s'étendant en aval dudit tronçon (19) de rinçage, ledit compartiment (114) de neutralisation est équipé d'une entrée d'un débit d'ozone gazeux produit par un générateur (24)d'ozone gazeux bullant dans ledit compartiment (114) de neutralisation qui comporte aussi une pompe doseuse délivrant une quantité d'un lessiviel (17) de lavage et/ou de désinfection.

15. Dispositif selon la
revendication 14, **caractérisé en ce que** la pluralitéde compartiments est formée de quatorze compartiments successifs et en cequ'il comprend quatre générateurs d'ozone gazeux, chaque générateur d'ozone gazeux étant disposé pour introduire un débit d'ozone gazeux dansun compartiment distinct.

16. Dispositif selon la revendication 15, **caractérisé en ce que** chaque générateur d'ozone gazeux est adapté pour introduire dans un compartiment, un débit d'ozone (O₃) gazeux tel que le rapport de ce débit d'ozone (O₃) gazeux, exprimé en kilogramme d'ozone gazeux introduit par heure dans ce compartiment sur le flux de textile circulant dans le tunnel (1) de lavage, exprimé en kilogramme de textiles par heure, est compris entre 1,0 10⁻⁵ et 2,0 10⁻⁵.

## Patentansprüche

1. Verfahren zum Waschen von Textilien, bei dem zu waschende Textilien in einem Waschtunnel (1) von stromauf nach stromab kontinuierlich weiterbewegt werden, wobei sie nacheinander eine Reihe von angrenzenden Kammern (101,102,... 114) durchlaufen, die den Waschtunnel (1) bilden;
wobei bei dem Verfahren ein Massenstrom einer als Waschzusammensetzung (16) bezeichneten wässrigen Zusammensetzung, die mindestens ein Waschmittel umfasst, mindestens in eine als Waschabschnitt (13) bezeichnete Teilmenge von aufeinander folgenden Kammern der Reihe von Kammern mit den weiterbewegten Textilen in Kontakt gebracht wird;
wobei die Waschzusammensetzung (16) eine Temperatur unter 35 °C aufweist,
wobei ein gasförmiger Ozonmassenstrom (O₃) in mindestens eine Kammer (105,106,11,114) des Waschabschnitts (13) eingeleitet wird, wobei der gasförmige Ozonmassenstrom in die und in Kontakt mit der Waschzusammensetzung (16) eingeleitet wird,
**dadurch gekennzeichnet, dass** der Waschtunnel (1) eine als Neutralisierungskammer (114) bezeichnete letzte Kammer umfasst, die sich stromab des Spülabschnitts (19) erstreckt und in der die weiterbewegten Textilen in Kontakt mit einer als Neutralisierungszusammensetzung (26) bezeichneten wässrigen Zusammensetzung sind, die mindestens ein Neutralisierungsmittel umfasst, das aus der aus den schwachen Säuren gebildeten Gruppe gewählt ist;
ein gasförmiger Ozonmassenstrom (O₃) in die Neutralisierungskammer (114) eingeleitet wird, wobei der gasförmige Ozonmassenstrom in die und in Kontakt mit der Neutralisierungszusammensetzung (26) eingeleitet wird.

2. Verfahren nach Anspruch 1, **dadurch gekennzeichnet, dass** die Waschzusammensetzung mindestens ein Enzym umfasst, das eine Temperatur optimaler Aktivität unter 35 °C aufweist.

3. Verfahren nach einem der Ansprüche 1 oder 2, **dadurch gekennzeichnet, dass** ein gasförmiger Ozonmassenstrom (O₃) in dem Waschtunnel (1) mindestens in eine erste stromaufwärtige Kammer (105) des Waschabschnitts (13) eingeleitet wird.

4. Verfahren nach einem der Ansprüche 1 bis 3, **dadurch gekennzeichnet, dass** ein gasförmiger Ozonmassenstrom (O₃) in dem Waschtunnel (1) in eine erste stromaufwärtige Kammer (105) des Waschabschnitts (13) und in eine zweite Kammer (106) des Waschabschnitts (13), die sich unmittelbar stromab dieser ersten Kammer (105) erstreckt, eingeleitet wird.

5. Verfahren nach einem der Ansprüche 1 bis 4, **dadurch gekennzeichnet, dass** mindestens ein gasförmiger Ozonmassenstrom (O₃) ein kontinuierlicher gasförmiger Ozonmassenstrom (O₃) ist.

6. Verfahren nach einem der Ansprüche 1 bis 5, **dadurch gekennzeichnet, dass** die Waschzusammensetzung Peroxyessigsäure umfasst.

7. Verfahren nach einem der Ansprüche 1 bis 6, **dadurch gekennzeichnet, dass** mindestens ein in mindestens eine Kammer des Waschtunnels (1) eingeleiteter gasförmiger Ozonmassenstrom (O₃) dergestalt ist, dass das Verhältnis dieses gasförmigen Ozonmassenstroms (O₃), ausgedrückt in Kilogramm des pro Stunde in eine der Kammern eingeleiteten gasförmigen Ozons, zu dem in dem Tunnel zirkulierenden Textilienstrom, ausgedrückt in Kilogramm Textilien pro Stunde, zwischen 1,0 10⁻⁵ und 2,0 10⁻⁵ beträgt.

8. Verfahren nach einem der Ansprüche 1 bis 7, **dadurch gekennzeichnet, dass** der in jede Kammer des Waschtunnels (1) eingeleitete gasförmige Ozonmassenstrom (O₃) dergestalt ist, dass das Verhältnis dieses gasförmigen Ozonmassenstroms (O₃), ausgedrückt in Kilogramm des pro Stunde in eine der Kammern eingeleiteten gasförmiges Ozons, zu der in dem Waschtunnel (1) pro Stunde verbrauchten Wassermenge zwischen 3,0 10⁻⁶ und 6,0 10⁻⁶ beträgt.

9. Verfahren nach einem der Ansprüche 1 bis 8, **dadurch gekennzeichnet, dass**, wenn der Waschtunnel (1) eine als Spülabschnitt (19) bezeichnete zweite Teilmenge von aufeinander folgenden Kammern (11,112,113) umfasst, in denen die Textilien in Kontakt mit einer als Spülzusammensetzung (21) bezeichneten wässrigen Zusammensetzung weiterbewegt werden, die eine Detergenzienkonzentration aufweist, die geringer als die Detergenzienkonzentration der Waschzusammensetzung (16) ist, und dazu angepasst ist, die in dem Spülabschnitt (19) weiterbewegten Textilien zu spülen und einen Strom gewaschener und im Wesentlichen waschmittelfreier Textilien stromab des Spülabschnitts (19) zu bilden; wobei sich der Spülabschnitt (19) stromab des Waschabschnitts (16) erstreckt;
ein gasförmiger Ozonmassenstrom (O₃) in mindestens eine Kammer des Spülabschnitts (19) eingeleitet wird, wobei der gasförmige Ozonmassenstrom in die und in Kontakt mit der Spülzusammensetzung (21) eingeleitet wird.

10. Verfahren nach Anspruch 9, **dadurch gekennzeichnet, dass** sich der Spülabschnitt (19) von stromauf nach stromab erstreckt zwischen:
- einer ersten stromaufwärtigen Spülkammer (111), die mit einer Entleervorrichtung (20) für die Spülzusammensetzung (21) ausgestattet ist, wobei die Entleervorrichtung (20) es ermöglicht, die Spülzusammensetzung (21) nach außerhalb des Waschtunnels (1) zu leiten, und;
- einer letzten stromabwärtigen Spülkammer (113), die mit einem Einlass (23) für ein Spülwasser in den Waschtunnel (1) ausgestattet ist;
so dass die Spülzusammensetzung (21) in dem Spülabschnitt (19) in Bezug auf den sich in dem Waschtunnel (1) bewegenden Textilienstrom im Gegenstrom fließt.

11. Verfahren nach einem der Ansprüche 9 oder 10, **dadurch gekennzeichnet, dass** der in eine Kammer (111) des Spülabschnitts (19) eingeführte gasförmige Ozonmassenstrom (O₃) dergestalt ist, dass das Verhältnis dieses gasförmigen Ozonmassenstroms (O₃), ausgedrückt in Kilogramm des pro Stunde in diese Kammer eingeleiteten gasförmigen Ozons, zu dem in dem Waschtunnel (1) zirkulierenden Textilienstrom, ausgedrückt in Kilogramm Textilien pro Stunde, zwischen 1,0 10⁻⁵ und 2,0 10⁻⁵ beträgt.

12. Verfahren nach einem der Ansprüche 1 bis 11, **dadurch gekennzeichnet, dass**, wenn der Waschtunnel (1) eine als Vorwaschabschnitt (3) bezeichnete Gruppe von aufeinander folgenden Kammern (101,102,103,104) umfasst, die sich am stromaufwärtigen Ende des Waschabschnitts (13) erstreckt;
darunter eine erste stromaufwärtige Kammer (101), die einen Bunker (2) zum Einleiten der zu waschenden Textilien in den Waschtunnel (1) bildet;
ein Massenstrom einer wässrigen Zusammensetzung (4,5) und ein Massenstrom mindestens eines Waschmittels (7) in diese erste Kammer (101) eingeleitet werden, so dass in dem Vorwaschabschnitt (3) ein Massenstrom einer als Vorwaschzusammensetzung (12) bezeichneten Zusammensetzung gebildet wird, der in dem Vorwaschabschnitt (3) entlang der gleichen Hauptrichtung und entlang des gleichen Richtungssinns wie die Hauptrichtung und wie der Richtungssinn des in dem Vorwaschabschnitt (12) und in dem Waschtunnel (1) weiterbewegten Textilienstroms zirkuliert.

13. Verfahren nach einem der Ansprüche 1 bis 12, **dadurch gekennzeichnet, dass** der in die Neutralisierungskammer (114) eingeleitete gasförmige Ozonmassenstrom (O₃) dergestalt ist, dass das Verhältnis dieses gasförmigen Ozonmassenstroms (O₃), ausgedrückt in Kilogramm des pro Stunde in diese Kammer eingeleiteten gasförmigen Ozons, zu dem in dem Waschtunnel (1) zirkulierenden Textilienstrom, ausgedrückt in Kilogramm Textilien pro Stunde, zwischen 1,0 10⁻⁵ und 2,0 10⁻⁵ beträgt.

14. Vorrichtung, als Waschtunnel (1) bezeichnet, des Typs, der aus einer Mehrzahl von Kammern gebildet wird, die sich in Reihe erstrecken und dazu angepasst sind, Textilien von stromauf nach stromab durch jede Kammer der Mehrzahl von Kammern nach dem Verfahren nach einem der Ansprüche 1 bis 13 kontinuierlich weiterbewegen zu können;
wobei der Waschtunnel (1) umfasst:
- Mittel, die geeignet sind, die Temperatur eines Massenstroms einer als Waschzusammensetzung bezeichneten wässrigen Zusammensetzung, die mindestens ein Tensid umfasst, auf einer Temperatur unter 35 °C, insbesondere zwischen 15 °C und 35 °C, bevorzugt zwischen 22 °C und 28 °C, noch bevorzugter in der Größenordnung von 25 °C, zu halten;
- mindestens einen Generator für gasförmiges Ozon, der geeignet ist, einen Strom gasförmiges Ozon (O₃) in mindestens eine Kammer das Waschtunnels (1) in die und in Kontakt mit der Waschzusammensetzung abzugeben,
**dadurch gekennzeichnet, dass** der Waschtunnel (1) eine als Neutralisierungskammer (114) bezeichnete stromabwärtige Kammer umfasst, die sich stromab des Spülabschnitts (19) erstreckt, wobei die Neutralisierungskammer (114) mit einem Einlass für einen von einem Generator (24) für gasförmiges Ozon erzeugten gasförmigen Ozonmassenstrom ausgestattet ist, der in der Neutralisierungskammer (114) perlt, die auch eine Dosierpumpe aufweist, die eine Menge eines Wasch- und/oder Desinfektionsmittels (17) abgibt.

15. Vorrichtung nach Anspruch 14, **dadurch gekennzeichnet, dass** die Mehrzahl von Kammern aus vierzehn aufeinander folgenden Kammern gebildet wird, und dass sie vier Generatoren für gasförmiges Ozon umfasst, wobei jeder Generator für gasförmiges Ozon angeordnet ist, um einen gasförmigen Ozonmassenstrom in eine unterschiedliche Kammer einzuleiten.

16. Vorrichtung nach Anspruch 15, **dadurch gekennzeichnet, dass** jeder Generator für gasförmiges Ozon dazu angepasst ist, in eine Kammer einen gasförmigen Ozonmassenstrom (O₃) einzuleiten, der dergestalt ist, dass das Verhältnis dieses gasförmigen Ozonmassenstroms (O₃), ausgedrückt in Kilogramm des pro Stunde in diese Kammer eingeleiteten gasförmigen Ozons, zu dem in dem Waschtunnel (1) zirkulierenden Textilienstrom, ausgedrückt in Kilogramm Textilien pro Stunde, zwischen 1,0 10⁻⁵ und 2,0 10⁻⁵ beträgt.

## Claims

1. Method for washing textiles, in which textiles to be washed are driven in continuous movement in a washing tunnel (1), from upstream to downstream, successively passing through a series of contiguous compartments (101, 102,... 114) forming the washing tunnel (1);
in which method a flow of a composition, called washing composition (16), which is aqueous and comprises at least one detergent agent, is brought into contact with the textiles driven in movement, at least in a subset, called washing section (13), of successive compartments of the series of compartments;
said washing composition (16) has a temperature below 35°C,
a flow of gaseous ozone (O₃) is introduced into at least one compartment (105, 106, 11, 114) of said washing section (13), the flow of gaseous ozone being introduced into and in contact with said washing composition (16), **characterized in that** the washing tunnel (1) comprises a final compartment, called neutralization compartment (114), extending downstream of said rinsing section (19) and in which the textiles driven in movement are in contact with a composition, called neutralization composition (26), which is aqueous and comprises at least one neutralizing agent selected from the group formed of weak acids;
a flow of gaseous ozone (O₃) is introduced into said neutralization compartment (114), the flow of gaseous ozone being introduced into and in contact with said neutralization composition (26).

2. Method according to Claim 1, **characterized in that** said washing composition comprises at least one enzyme having an optimum activity temperature below 35°C.

3. Method according to either of Claims 1 and 2, **characterized in that** a flow of gaseous ozone (O₃) is introduced into the washing tunnel (1) at least in a first, upstream compartment (105) of said washing section (13).

4. Method according to one of Claims 1 to 3, **characterized in that** a flow of gaseous ozone (O₃) is introduced into the washing tunnel (1) in a first, upstream compartment (105) of said washing section (13) and in a second compartment (106) of said washing section (13) extending immediately downstream of this first compartment (105).

5. Method according to one of Claims 1 to 4, **characterized in that** at least one flow of gaseous ozone (O₃) is a continuous flow of gaseous ozone (O₃).

6. Method according to one of Claims 1 to 5, **characterized in that** said washing composition comprises peracetic acid.

7. Method according to one of Claims 1 to 6, **characterized in that** at least one flow of gaseous ozone (O₃) introduced into at least one compartment of the washing tunnel (1) is such that the ratio of this flow of gaseous ozone (O₃), expressed in kilograms of gaseous ozone introduced per hour into one of the compartments, to the stream of textile circulating in the tunnel, expressed in kilograms of textiles per hour, is between 1.0 10⁻⁵ and 2.0 10⁻⁵.

8. Method according to one of Claims 1 to 7, **characterized in that** the flow of gaseous ozone (O₃) introduced into each compartment of the washing tunnel (1) is such that the ratio of this flow of gaseous ozone (O₃), expressed in kilograms of gaseous ozone introduced per hour into one of the compartments, to the mass of water consumed per hour in the washing tunnel (1) is between 3.0 10⁻⁶ and 6.0 10⁻⁶.

9. Method according to one of Claims 1 to 8, **characterized in that** the washing tunnel (1) comprises a second subset, called rinsing section (19), of successive compartments (11, 112, 113) in which the textiles are driven in movement and in contact with a composition, called rinsing composition (21), which is aqueous and has a detergent concentration lower than the detergent concentration of said washing composition (16) and designed to rinse the textiles driven in movement in said rinsing section (19) and to form a stream of washed textiles that are substantially free of detergent agent downstream of said rinsing section (19);
said rinsing section (19) extending downstream of said washing section (16);
a flow of gaseous ozone (O₃) is introduced into at least one compartment of said rinsing section (19), the flow of gaseous ozone being introduced into and in contact with said rinsing composition (21).

10. Method according to Claim 9, **characterized in that** said rinsing section (19) extends from upstream to downstream between:
- a first, upstream rinsing compartment (111) equipped with a device (20) for draining said rinsing composition (21), the drainage device (20) making it possible to direct said rinsing composition (21) towards the outside of the washing tunnel (1), and;
- a final, downstream rinsing compartment (113) equipped with an inlet (23) for a rinsing water in the washing tunnel (1);
such that said rinsing composition (21) flows counter-currentwise in said rinsing section (19), with respect to the stream of textiles moving in the washing tunnel (1).

11. Method according to either of Claims 9 and 10, **characterized in that** the flow of gaseous ozone (O₃) introduced into a compartment (111) of said rinsing section (19) is such that the ratio of this flow of gaseous ozone (O₃), expressed in kilograms of gaseous ozone introduced per hour into this compartment, to the stream of textile circulating in the washing tunnel (1), expressed in kilograms of textiles per hour, is between 1.0 10⁻⁵ and 2.0 10⁻⁵.

12. Method according to one of Claims 1 to 11, **characterized in that** the washing tunnel (1) comprises a group, called pre-washing section (3), of successive compartments (101, 102, 103, 104) extending at the upstream end of said washing section (13);
of which a first, upstream compartment (101) forms a hopper (2) for introducing the textiles to be washed into the washing tunnel (1);
a flow of an aqueous composition (4, 5) and a flow of at least one detergent agent (7) are introduced into this first compartment (101) so as to form, in said pre-washing section (3), a flow of a composition, called pre-washing composition (12), circulating in said pre-washing section (3), in the same main direction and in the same direction as the main direction and as the direction of the stream of the textiles driven in movement in said pre-washing section (12) and in the washing tunnel (1).

13. Method according to one of Claims 1 to 12, **characterized in that** the flow of gaseous ozone (O₃) introduced into said neutralization compartment (114) is such that the ratio of this flow of gaseous ozone (O₃), expressed in kilograms of gaseous ozone introduced per hour into this compartment, to the stream of textile circulating in the washing tunnel (1), expressed in kilograms of textiles per hour, is between 1.0 10⁻⁵ and 2.0 10⁻⁵.

14. Device, called washing tunnel (1), of the type formed of a plurality of compartments extending in series and designed to be able to drive textiles in continuous movement, successively from upstream to downstream through each compartment of the plurality of compartments according to the method of one of Claims 1 to 13;
the washing tunnel (1) comprising:
- means that are able to maintain the temperature of a flow of a composition, called washing composition, which is aqueous and comprises at least one surfactant, at a temperature below 35°C, in particular between 15°C and 35°C, preferably between 22°C and 28°C, more preferentially of the order of 25°C;
- at least one gaseous ozone generator that is able to deliver a flow of gaseous ozone (O₃) into at least one compartment of the washing tunnel (1), into and in contact with said washing composition,
**characterized in that** the washing tunnel (1) comprises a downstream compartment, called neutralization compartment (114), extending downstream of said rinsing section (19), said neutralization compartment (114) is equipped with an inlet for a flow of gaseous ozone produced by a generator (24) of bubbling gaseous ozone in said neutralization compartment (114) that also has a metering pump delivering a quantity of a washing and/or disinfecting laundry agent (17).

15. Device according to claim 14, **characterized in that** the plurality of compartments is formed of fourteen successive compartments and **in that** it comprises four gaseous ozone generators, each gaseous ozone generator being disposed to introduce a flow of gaseous ozone into a separate compartment.

16. Device according to Claim 15, **characterized in that** each gaseous ozone generator is designed to introduce, into a compartment, a flow of gaseous ozone (O₃) such that the ratio of this flow of gaseous ozone (O₃), expressed in kilograms of gaseous ozone introduced per hour into this compartment, to the stream of textile circulating in the washing tunnel (1), expressed in kilograms of textiles per hour, is between 1.0 10⁻⁵ and 2.0 10⁻⁵.
